# EUROPEAN PATENT SPECIFICATION

(11) **EP 2 199 837 B1**
(45) Date of publication and mention of the grant of the patent: **04.04.2012**
(21) Application number: 08305949.3
(22) Date of filing: 16.12.2008
(51) Int. Cl.: G02B 5/18

(54) **A dispersion grating**
Zerstreuungsgitter
Réseau de dispersion

(43) Date of publication of application: 23.06.2010
(73) Proprietor: Alcatel Lucent, 75007 Paris (FR)
(72) Inventor: Pardo, Flavio, New Providence, NJ 07974 (US); Pai, Chien-Shing, Bridgewater, NJ 08807 (US); Simon, Maria Elina, Murray Hill, NJ 07974-0636 (US)
(74) Representative: Shamsaei Far, Hassan

(56) References cited:
- EP-A- 0 084 930
- EP-A- 1 645 893
- US-A- 3 944 420
- US-A- 4 842 633
- US-A- 5 757 449
- US-A- 5 814 237

## Description

### FIELD OF THE INVENTION

The present invention generally relates to a dispersion grating.

### BACKGROUND OF THE INVENTION

Dispersion gratings are widely used in optical instruments. One example of such use is in optical switches. The general trends towards producing compact and low consumption instruments give rise increasingly to a need to produce small size components while their response and efficiency is maintained at a high level. A dispersion grating is typically used as a mean to provide dispersion of the incident light into beams which are deflected at an angle which is different from the angle of the incident light. For the sake of clarity it is noted that reference to high dispersion is made for applications where a small change in incident wavelength produces a large change in output beam angle of diffraction.

If the level of dispersion of a grating is relatively high, the device may be manufactured in a relatively smaller size because more deflected beams may be obtained in less volume.

US Patent Number 3944420 discloses a surface relief pattern, e.g. a surface relief hologram, being substantially linearly transferred to a hard durable substrate, capable of being used as a medium for permanent storage of the pattern or as a master for replicating the hologram, from a photoresist coated on the substrate, by exposing the photoresist and the substrate to a photoresist developer bath and a chemical bath capable of etching the substrate at a rate substantially proportional to the development rate of the photoresist. According to the authors, this technique allows the transfer of surface relief patterns with dimensions on the order of one micron or less, and is applicable to the formation of surface relief holographic patterns in permanent media for archival storage and to making master surface relief holograms.

EP-A-1645893 discloses a diffraction grid for electromagnetic radiation, in which on one surface is formed a substrate, a surface structure, formed from equidistant mutually parallel linear structural elements and the total surface of the substrate and the structural elements is coated with a further layer, in which the layers form a surface uniform in wave shape and contour, with alternating arranged wave crest and wave troughs.

### SUMMARY OF THE INVENTION

In order to provide dispersion, geometrical shapes are built on the substrate of the grating. These geometrical shapes, such as for example grooves, are typically repeated on the surface of the substrate of the grating thus providing a non-flat reflective or deflective surface which - designed according to the specific requirements of each application - disperses the light incident thereupon. Therefore, in order to obtain satisfactory levels of dispersion and efficiency, the design of such geometric shapes is an important consideration. In this regard, a so-called "waveform" shape is a desirable shape for the grating. In practice, the more the waveform approaches a sinusoidal shape the better the level of dispersion and efficiency will be.

Among the known techniques of fabrication of gratings, one technique is the so-called mechanical method which is mainly based on mechanical construction of the geometric shapes on the device. According to this method, a mechanical press tool, such as a wheel, is run over a soft metal, thereby producing trenches on the surface of the metal, the trenches forming the required groves. This method however is not suitable for obtaining ultra-high dispersion effects as the trenches cannot be easily produced in fine distances from each other.

Another known technique is the use of lithography in photoresist by optical interference. According to this method, beams of light are made to interfere with each other producing constructive and destructive combinations thereby creating lines on the photoresist material. The pattern is then transferred to the substrate material such as silicon or glass. However, this method has the drawback that the patterns that can be generated are typically limited in size and flexibility because the only patterns that can be produced are the ones generated by interfering beams and therefore freedom in design of the patterns is not possible or at least is very limited. For this same reason, this process is unsuitable when a highly dispersive pattern design is required. Furthermore, it is also difficult to tailor grayscale and etching pattern transfer at these scales because photoresists exposed in this manner typically define abrupt dark and light traces without intermediate "grey" zones. This is not desirable because when the pattern is transferred on the substrate, the abrupt traces produce sharp-angled groves more of a square-wave shape; as opposed to groves having grey zones which, when transferred onto the substrate provide shapes which are closer to sinusoidal patterns.

Yet another known technique of fabrication of gratings is based on the use of electron beam writing over photoresist material. This method overcomes problems as regards flexibility due to the fact that any desired pattern can be generated, however it still suffers from problems as mentioned in relation to the previous techniques, specially because the process is slow and therefore not appropriate for producing large gratings (*i.e*. gratings with a high number of deflective traces) required for high dispersion applications.

Embodiments of the present invention aim at using a combination of lithography and selected materials and processes, as will be described hereinbelow, in order to obtain fine-pitched gratings with a waveform which may be designed to approach the desired sinusoidal shape over a large area of the device.

Herein, the term "pitch" refers to the spacing between two adjacent geometric shapes, such as grooves as mentioned above, built on the surface of the grating. In order to define the pitch, known techniques of DUV lithography may be used. However, in order to overcome the already mentioned grayscale problem, specific etching and material reflow techniques may be used to allow for obtaining a smooth and high efficiency grating waveform that approaches a sinusoidal shape.

Accordingly, some embodiments of the present invention feature a method of manufacturing a dispersion grating using an optical material, the method comprising the steps of:
- generating in a photoresist material, a first pattern comprising a plurality of lines of a selected thickness separated by a predetermined pitch;
- transferring the generated first pattern to a layer of a first material grown on a surface of the optical material, the first material having first melting temperature;
- depositing a layer of a second material grown on a surface of the first material, the second material having a second melting temperature such that the second melting temperature is lower than the first melting temperature;
- applying a reflow process at a predetermined temperature to the resulting structure comprising the optical material, the first material and the second material so as to obtain a second pattern, the predetermined temperature being about or above a melting temperature of the second material and below a melting temperature of the first material;
- etching a surface of the second pattern so as to substantially remove the first material and the second material thereby transferring the second pattern to the optical material.

According to some embodiments of the present invention the optical material is silicon or glass or glass wafer.

According to some embodiments of the present invention the first material is undoped silicon oxide and the second material is doped silicon oxide.

According to some embodiments of the present invention the first material and the second material are each photoresist materials having different melting temperatures.

According to some embodiments of the present invention the optical material has a refractive index of about or more than 3.

According to some embodiments of the present invention the predetermined pitch is about 200 nm or less.

According to some embodiments of the present invention the first pattern transferred to the layer of the first material is generated with a thickness determined as a function of a modulation depth required for the dispersion grating.

According to some embodiments of the present invention the etching of the surface of the second pattern is performed using a reactive ion etching technique.

According to some embodiments of the present invention after the etching of the surface of the second pattern, the resulting structure is coated by evaporating a metal on the etched surface.

Embodiments of the invention further feature a dispersion grating device obtained according to the method as described herein.

Further embodiments of the invention feature an optical switch comprising the dispersion grating obtained according to the method as described herein. Further embodiments of the invention feature an optical demultiplexer comprising the dispersion grating obtained according to the method as described herein. These and further features and advantages of the present invention are described in more detail in the following description as well as in the claims with the aid of the accompanying drawing.

### BRIEF DESCRIPTION OF THE DRAWINGS

Figures 1a and 1b are schematic exemplary representations of some steps performed in the process of manufacturing a dispersion grating according to known techniques.
Figures 2a and 2g are schematic exemplary representations of some steps performed in the process of manufacturing a dispersion grating according to embodiments of the invention.
Figure 3 is a schematic exemplary representation of a dispersion grating device according to embodiments of the invention.

### DETAILED DESCRIPTION

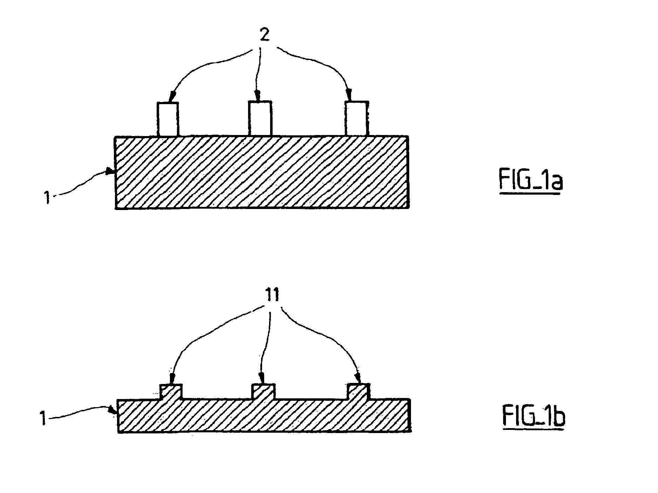

Refernng to figures 1a and 1b, and for a better understanding of the embodiments of the present invention, a brief description of some steps performed in the process of manufacturing a dispersion grating according to known techniques is provided.

A substrate 1 is selected from an optical material. The surface of the substrate 1 is covered with photoresist material by known techniques. In order to generate continuous, large areas (about 22x22mm) of fine lines at the required pitch in the photoresist a DUV stepper lithography may be used. The choice of the pitch in the lithography is made according to the requirements of each specific application. As a result of such lithography, the required fine lines are generated on the photoresist material which is then etched in order to remove the unwanted parts of the photoresist and obtain the pattern 2 required for the next steps of the process.

At a next step, the pattern 2 is transferred on the substrate 1. The transfer is made by known etching techniques. The resulting pattern 11 on the surface of the substrate 1 however, does not form a smooth waveform shape which is desired for a high-efficiency grating function.

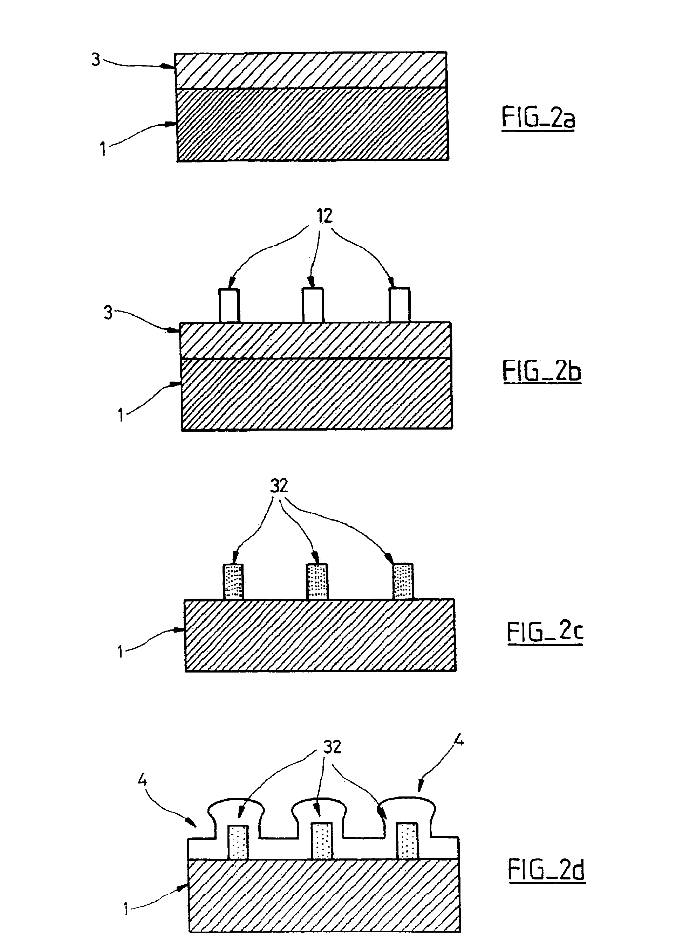

In order to obtain the desired smooth waveform shape, embodiments of the present invention propose the following steps with reference to figures 2a-2g in which like elements have like reference numerals as those of figures 1 a and 1 b. A layer of a first material 3 is grown on the surface of substrate 1 as shown in figure 2a, the layer having an appropriate thickness. The appropriate thickness is determined based on the approximate grating amplitude which is an amplitude measured from the "valleys" to the "ridges" of the waveform shape (in waveform approaching a sinusoidal shape, the grating amplitude may be considered the pick to pick amplitude of the sine-wave) required for the final grating structure. In this regard, a larger grating amplitude provides for a larger the modulation depth. The substrate 1 is selected from an optical material with a high refractive index, typically of an index about or more than 3, such as silicon or glass.

Next photoresist is applied on the layer of the first material and a desired pattern 2 is generated on the photoresist material following a process similar as that described in relation to figure 1 a, namely generating fine lines at the required pitch in the photoresist using a DUV stepper lithography and removing the unwanted parts of the photoresist in order to obtain the desired pattern 2.

A preferred choice of pitch is about or less than 200nm, for which a 193nm DUV stepper lithography may be employed.

Next the desired pattern as obtained is transferred into the layer 3 of the first material. The resulting structure is schematically shown in figure 2c with the transferred pattern on the layer of the first material being identified by reference numeral 32 which represents a pattern comprising lines obtained on the substrate 1.

At a next step a layer of a second material 4 is deposited on the structure such that the layer of the second material 4 covers substantially the pattern 32 of the first material as well as a surface of the substrate 1 as shown in the figure 2d. As it may be observed in this figure, the resulting pattern is still not as smooth as it is desired for a satisfactory structure.

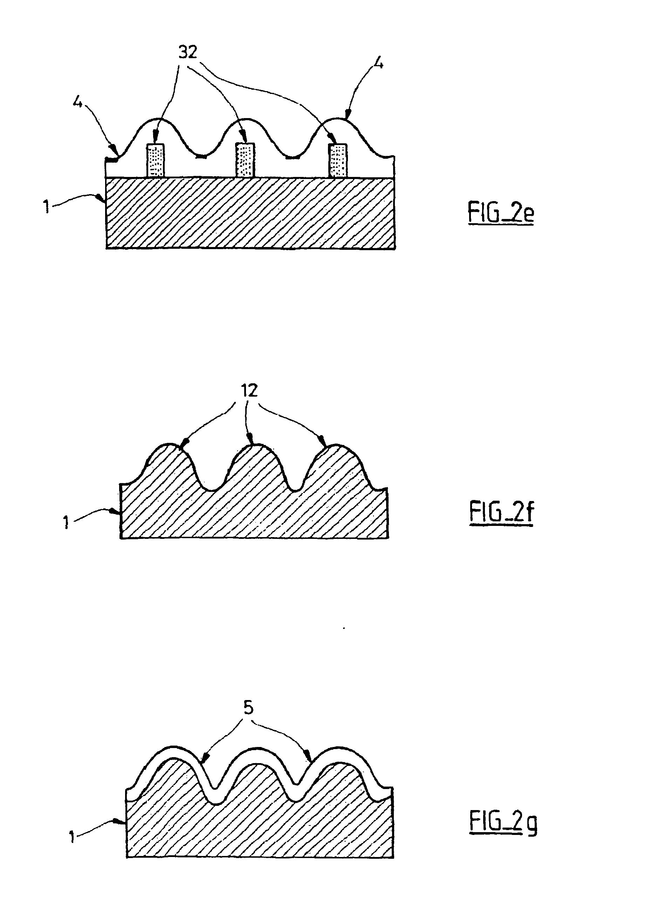

In order to smoothen the pattern defined by the layer of the second material 4, a reflow process is applied on the resulting structure. The reflow process is performed at a predetermined temperature. The predetermined temperature is chosen according to the specific requirements and conditions of the materials used, however the selection is made in a such a manner that the reflow temperature is above the melting temperature of the second material 4 and below the melting temperature of the first material 32. The reflow process at a temperature above the melting temperature of the second material 4 gives rise to the melting of this second material 4 thereby changing its previously non-smooth shape (as shown in figure 2d) to a smooth shape as shown in figure 2e. As the applied reflow temperature is below the melting temperature of the first material 32, the first material 32 does not melt and thus maintains its original form thereby causing the melted second material 4 to adopt a waveform shape in conformity with the pattern defined by the first material 32. The resulting waveform shape is schematically shown in figure 2e on the surface of the second material 4.

At a next step, the waveform shape obtained on the surface of the second material 4 is transferred into the bulk of the substrate 1 by using etching techniques. The etching technique is selected such that the process of etching attacks both the first and the second materials, 32 and 4 respectively.

As a result of such etching process, the first material 32 and the second material 4 are removed substantially progressively and in conformity with the waveform shape of the surface of the second material 4 obtained in the previous step described with respect to figure 2e, thereby producing a waveform shape on the surface of the substrate 1 as schematically shown in figure 2f by reference numeral 12.

At a next step, a metal coating 5 is deposited over the surface of the substrate 1 which in turn maintains the waveform shape of the surface of the substrate 1 as schematically shown in figure 2g. A preferred material for the metal coating is gold which may be deposited by evaporation techniques. However, other highly reflective metals such as Al may also be used.

The optical material selected as substrate 1 may be of known materials such as for example silicon or glass or any other optically non-absorbing material at the wavelength of interest as known by a person skilled in the related art. Such material is selected from among those having a melting temperature which is substantially higher than the respective melting temperature of both the first and the second materials. Some non-limiting examples for the optical material are silicon or glass or glass wafer,. Some specific examples are sapphire which melts at 2050C, or quartz which melts at 1600C, both being available in wafer form and suitable for use in the method as described herein.

The selection of the first material and the second material may be made by a person skilled in the related art. Some examples of such materials may be undoped silicon oxide as the first material and doped silicon oxide as the second material. These materials typically have melting temperatures which are suitable for application in the method described herein. For example, the undoped silicon oxide material 32 may have a typical melting temperature of about or bove 1000C whereas the doped silicon oxide material 4 may have typical melting temperature in the range of about 750-850C for example if Borophosphosilicate glass (BPSG) is used.

Another example for the choice of the first and the second materials is photoresist. In such case, two different types of photoresist materials are used such that the photoresist used as the first material has a higher melting temperature than the melting temperature of the second photoresist material. Such photoresist materials are known and available in the market.

In case, undoped and doped silicon oxide materials are used as first and second materials respectively, the etching technique may be chosen from the techniques often referred to as being "blind" to doping. A known etching technique of such kind is the so-called Reactive Ion Etching (RIE) which is known to those skilled in the art.

In case photoresist materials are used as first and second materials respectively, then the etching process may be chosen by taking into account that photoresists with a high melting temperature typically tend to etch slower than photoresists with a low melting temperature. In such case the etching process of the two types of photoresist may be slightly different, however such difference is negligible as regards the final etched shape achieved.

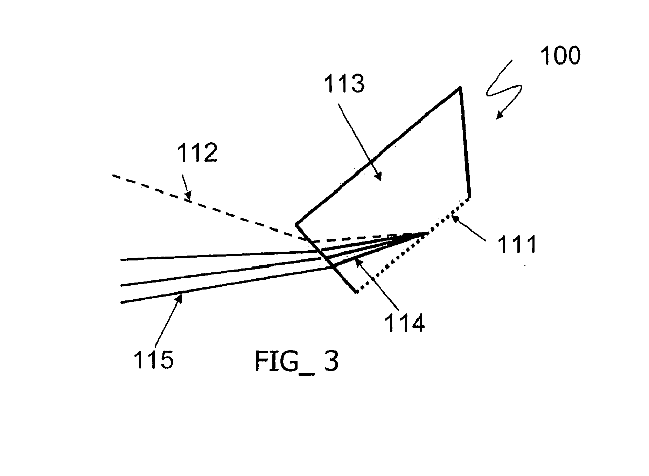

In this manner a grating is obtained with a pitch for dispersion being as fine as desired for a specific use, thus allowing for the generation of a high number of deflected beams and therefore providing, as a result, a highly dispersive device. Figure 3 schematically represents an example of a dispersion grating obtained according to embodiments of the present invention. The grating 100 therefore comprises a pattern of dispersive lines 111 (hereinafter, dispersive pattern) with a grating period of for example about 4250 lines per millimeter and being made of a high refractive index optical material, the index being typically about or more than 3, such as for example silicon.

The exemplary grating of figure 3 is a so called immersion grating, where a light beam 112 first enters the high refractive index material 113 and is deflected according to Snell's law. Once the incoming and deflected light reaches the dispersive pattern 111 of the grating 100, it is further diffracted by the effect of the dispersive pattern 111 resulting in a plurality of spectral components 114 of light. The spectral components of the light 114 then exist the high refractive index material 113 being again deflected according to Snell's law as shown by reference numeral 115. This type of grating provides a dispersion level that is considerably (for example 8 times) higher than a conventional dispersion grating, allows to substantially reduce the size of grating-based devices such as switches or demultiplexers, but more importantly the grating makes it more practical to design new optical arrangements for more complex devices. For example a free space demultiplexer which has a typical size of about 30mmx20mmx60mm, can be designed in a more reduced size, for example about 15mmx5mmx2mm.

## Claims

1. A method of manufacturing a dispersion grating using an optical material, the method comprising the steps of:
- generating in a photoresist material, a first pattern comprising a plurality of lines of a selected thickness separated by a predetermined pitch ;
- transferring the generated first pattern to a layer of a first material (3) grown on a surface of the optical material, the first material having first melting temperature;
- depositing a layer of a second material (4) grown on a surface of the first material, the second material having a second melting temperature such that the second melting temperature is lower than the first melting temperature;
- applying a reflow process at a predetermined temperature to the resulting structure comprising the optical material, the first material (3) and the second material (4) so as to obtain a second pattern, the predetermined temperature being about or above the second melting temperature of the second material and below the first melting temperature of the first material; and;
- etching a surface of the second pattern so as to substantially remove the first material and the second material thereby transferring the second pattern to the optical material.

2. The method of claim 1 wherein the optical material is silicon or glass or glass wafer.

3. The method of claim 1 or claim 2 wherein the first material is undoped silicon oxide and the second material is doped silicon oxide.

4. The method of claim 1 or claim 2 wherein the first material and the second material are each photoresist materials having different melting temperatures.

5. The method of any one of the previous claims wherein the optical material has a refractive index of about or more than 3.

6. The method of any one of the previous claims wherein the predetermined pitch is about 200 nm or less.

7. The method of any one of the previous claims wherein the first pattern transferred to the layer of the first material is generated with a thickness determined as a function of a modulation depth required for the dispersion grating.

8. The method of claim 3 wherein the etching of the surface of the second pattern is performed using a reactive ion etching technique.

9. The method of claim 8 wherein after the etching of the surface of the second pattern, the resulting structure is coated by evaporating a metal on the etched surface.

## Patentansprüche

1. Verfahren zur Herstellung eines Zerstreuungsgitters unter Verwendung eines optischen Materials, wobei das Verfahren die folgenden Schritte umfasst:
- Erzeugen eines Photoresist-Materials, wobei ein erstes Muster eine Mehrzahl von Linien einer ausgewahlten Dicke, welche durch einen vorbestimmten Abstand getrennt sind, umfasst
- Übertragen des erzeugten ersten Musters auf eine Schicht eines auf einer Oberfläche des optischen Materials aufgewachsenen ersten Materials (3), wobei das erste Material eine erste Schmelztemperatur aufweist;
- Abscheiden einer Schicht eines auf einer Oberfläche des ersten Materials aufgewachsenen zweiten Materials (4), wobei das zweite Material eine zweite Schmelztemperatur aufweist, so dass die zweite Schmelztemperatur niedriger ist als die erste Schmelztemperatur.
- Anwenden eines Reflow-Prozesses bei einer vorbestimmten Temperatur auf die resultierende Struktur, welche das optische Material, das erste Material (3) und das zweite Material (4) umfasst, um ein zweites Muster zu erhalten, wobei die vorbestimmte Temperatur annähernd der zweiten Schmelztemperatur des zweiten Materials entspricht oder hoher als diese und niedriger als die erste Schmelztemperatur des ersten Materials ist; und
- Atzen einer Oberfläche des zweiten Musters, um im Wesentlichen das erste Material und das zweite Material zu entfernen und dabei das zweite Muster auf das optische Material zu übertragen

2. Verfahren nach Anspruch 1, wobei das optische Material Silizium oder Glas oder Wasserglas ist.

3. Verfahren nach Anspruch 1 oder Anspruch 2, wobei das erste Material undotieres Siliziumoxid ist und das zweite Material dotieres Siliziumoxid ist.

4. Verfahren nach Anspruch 1 oder Anspruch 2, wobei das erste Material und das zweite Material jeweils Photoresist-Materialien mit unterschiedlichen Schmelztemperaturen sind

5. Verfahren nach einem beliebigen der vorstehenden Ansprüche, wobei das optische Material einen Brechungsindex von annähernd oder mehr als 3 aufweist

6. Verfahren nach einem beliebigen der vorstehenden Ansprüche, wobei der vorbestimmte Abstand annähernd 200 nm oder weniger beträgt.

7. Verfahren nach einem beliebigen der vorstehenden Ansprüche, wobei das auf die Schicht des ersten Materials übertragene erste Muster mit einer in Abhangigkeit von einer für das Zerstreuungsgitter erforderlichen Modulationstiefe bestimmten Dicke erzeugt wird.

8. Verfahren nach Anspruch 3, wobei das Atzen der Oberflache des zweiten Musters unter Verwendung einer reaktiven Ionenätztechnik durchgeführt wird

9. Verfahren nach Anspruch 8, wobei, nach dem Ätzen der Oberfläche des zweiten Musters, die resultierende Struktur durch Verdampfen eines Metalls auf der geatzten Oberflache beschichtet wird.

## Revendications

1. Procédé de fabrication d'un réseau de dispersion en utilisant un matériau optique, le procédé comprenant les étapes suivantes :
- génération, dans un matériau photorésistant, d'un premier motif comprenant une pluralité de lignes d'épaisseur choisie séparées par un pas prédéterminé,
- transfert du premier motif généré à une couche de premier matériau (3) crûe sur une surface du matériau optique, le premier matériau ayant une première température de fusion ;
- dépôt d'une couche d'un deuxième matériau (4) crûe sur une surface du premier matériau, le deuxième matériau ayant une deuxième température de fusion telle que la deuxième température de fusion est inférieure à la première température de fusion;
- application d'un processus de reflux à une température prédéterminée à la structure résultante comprenant le matériau optique, le premier matériau (3) et le deuxième matériau (4) de manière à obtenir un deuxième motif, la deuxième température étant approximativement égale ou supérieure à la deuxième température de fusion du deuxième matériau et inférieure à la première température de fusion du premier matériau ; et
- gravure d'une surface du deuxième motif de manière à retirer sensiblement le premier matériau et le deuxième matériau, transférant ainsi le deuxième motif au matériau optique

2. Procédé selon la revendication 1, selon lequel le matériau optique est du silicium ou du verre ou une galette en verre

3. Procédé selon la revendication 1 ou 2, selon lequel le premier matériau est de l'oxyde de silicium non dopé et le deuxième matériau est de l'oxyde de silicium dopé.

4. Procédé selon la revendication 1 ou 2, selon lequel le premier matériau et le deuxième matériau sont tous deux des matériaux photorésistants ayant des températures de fusion différentes

5. Procédé selon l'une quelconque des revendications précédentes, selon lequel le matériau optique a un indice de réfraction approximativement égal ou supérieur à 3

6. Procédé selon l'une quelconque des revendications précédentes, selon lequel le pas prédéterminé est approximativement égal ou inférieur à 200 nm.

7. Procédé selon l'une quelconque des revendications précédentes, selon lequel le premier motif transféré à la couche de premier matériau est généré avec une épaisseur déterminée en fonction d'une profondeur de modulation requise pour le réseau de dispersion.

8. Procédé selon la revendication 3, selon lequel la gravure de la surface du deuxième motif est effectuée en utilisant une technique de gravure ionique réactive.

9. Procédé selon la revendication 8, selon lequel, après la gravure de la surface du deuxième motif, la structure résultante est dotée d'un revêtement par évaporation d'un métal sur la surface gravée.
